# EUROPÄISCHE PATENTSCHRIFT

(11) **EP 0 365 887 B1**
(45) Veröffentlichungstag und Bekanntmachung des Hinweises auf die Patenterteilung: **17.08.1994**
(21) Anmeldenummer: 89118483.0
(22) Anmeldetag: 05.10.1989
(51) Int. Cl.: C02F 1/28, B01D 24/04

(54) **Filterkartusche zum Einsatz in ein Gerät zum Filtern von Flüssigkeit, insbesondere von Trinkwasser**
Filter cartridge for a liquid-filtration apparatus, especially for water filters
Cartouche filtrante pour dispositif de filtration de liquides, notamment d'eau potable

(30) Priorität: 28.10.1988 DE 8813571 U
(43) Veröffentlichungstag der Anmeldung: 02.05.1990
(73) Patentinhaber: Oxyphen AG, 8023 Zürich (CH)
(72) Erfinder: Nieweg, Heinrich, D-4800 Bielefeld 14 (DE)
(74) Vertreter: Hanewinkel, Lorenz, Dipl.-Phys.

(56) Entgegenhaltungen:
- EP-A- 0 235 315
- DE-U- 8 713 769
- DE-U- 8 805 718
- GB-A- 2 197 647

## Beschreibung

Die Erfindung bezieht sich auf eine Filterkartusche zum Einsatz in ein Gerät zum Filtern von Flüssigkeiten, insbesondere von Trinkwasser, mit einem becherförmigen, eine körnige Filtermasse aufnehmenden Behälter, der in seinem Behälterboden Durchflußöffnungen aufweist und an dem ein flachkegelförmiger Deckel mit Durchflußöffnungen und mit in der Kegelspitze angeformten, sich vom Deckel abhebenden hohlen Dom mit Entlüftungsöffnung abnehmbar gehalten ist.

Eine derartige Filterkartusche ist aus dem DE-U 8 713 769 bekannt geworden, bei der der gelochte oder geschlitzte Deckel und Boden direkt ein Ein- und Auslaufsieb ergeben und im Dom des Deckels ist eine Entlüftungsöffnung ausgespart.

Diese beiden Siebteile können aber keine sichere Rückhaltewirkung für die körnige, in die Filterkartusche eingebrachte Filtermasse (Reinigungsmittel) gewährleisten, da ein Austritt bei der Wasser- und Luftströmung durch die Sieblöcher oder -schlitze und die domseitige Entlüftungsöffnung nicht ausgeschlossen ist.

Hierdurch wird die Filterwirkung beeinträchtigt, was insbesondere bei Trinkwasser sehr nachteilig ist.

Aufgabe der Erfindung ist es, eine nach der eingangs genannten Art aufgebaute Filterkartusche dahingehend zu verbessern, daß diese bei einfacher Ausführung und kostengünstiger Herstellung eine sichere Rückhaltewirkung auf die körnigen, in der Filterkartusche eingebrachten Filtermasse ausübt, bei der Wasser- und Luftdurchströmung ein unerwünschtes Austreten von Filtermassekörnern aus den boden- und deckelseitigen Durchflußöffnungen verhindert und eine definierte Entlüftung zum kontrollierten Wasserdurchfluß für eine gesteigerte Filterwirkung ergibt.

Diese Aufgabe wird erfindungsgemäß durch die kennzeichnenden Merkmale des Patentanspruches 1 gelöst.

Die sich daran anschließenden Unteransprüche 2 bis 9 beinhalten Gestaltungsmerkmale, welche vorteilhafte und förderliche Weiterbildungen der Aufgabenlösung darstellen.

Die erfindungsgemäße Filterkartusche zeigt folgende Vorteile:
- Durch den zusätzlichen Einsatz von Sieben aus einem Vliesstoff wird die körnige Filtermasse (und auch sehr feine Filtermassekörner) gegen Austreten aus der Filterkartusche optimal gesichert;
- der Vliesstoff der Siebe läßt das Wasser durch, aber keine Filtermassekörner;
- die Siebe sind durch Schweißnähte herstellungsmäßig einfach und absolut dicht an den Rändern mit dem Deckel und dem Boden verbunden, so daß auch in diesen Verbindungsstellen eine sichere Rückhaltung vorliegt;
- der Dom des Deckels ist umfangsmäßig mit mehreren besonders gestalteten Entlüftungsschlitzen ausgestattet, die eine definierte Belüftung und dadurch kontrollierten Wasserdurchfluß gewährleisten;
- die Schlitze sind in ihrem gesamten Entlüftungsquerschnitt so bemessen, daß das durchfließende Wasser in seiner Geschwindigkeit und Verweilzeit auf die optimale Filterung abgestellt ist;
- die Schlitze sind in ihrer Querschnittsbreite kleiner als die kleinsten Filtermassekörner ausgelegt, so daß auch die Entlüftungsschlitze eine sichere Rückhaltewirkung auf die Filtermasse ausüben;
- die zusätzlich eingeschweißten Siebe und die besonders gestalteten Entlüftungsschlitze gewährleisten im Zusammenwirken eine optimal Filtrierung von Trinkwasser.

Auf den Zeichnungen ist ein Ausführungsbeispiel der Erfindung dargestellt, welches nachfolgend näher erläutert wird. Es zeigt:
- Fig. 1: eine perspektivische Darstellung eines Wasser-Filtergerätes, bestehend aus einem das gefilterte Wasser aufnehmenden Sammelgefäß, einem darauf abnehmbar angeordneten, das zu filternde Wasser aufnehmenden Aufsatztopf mit abnehmbarem Deckel und einer im Boden des Aufsatztopfes herausnehmbar gehaltenen und in das Sammelgefäß hineinragenden Filterkartusche,
- Fig. 2: einen Längsschnitt durch die Filterkartusche,
- Fig. 3: eine perspektivische Explosionsdarstellung der Filterkartusche,
- Fig. 4: eine Seitenansicht des abnehmbaren Deckels der Filterkartusche,
- Fig. 5: einen Querschnitt durch den Dom des Deckels gemäß Schnittlinie A-A in Fig. 4.

Die Filterkartusche (1) zum Einsatz in ein Gerät zum Filtern von Flüssigkeiten, insbesondere von Wasser, besteht aus einem becherförmigen Behälter (2) mit abnehmbarem Deckel (3) mit Durchflußöffnungen (4), einer in den Behälter (2) eingebrachten, körnigen Filtermasse (5) und je einem zwischen Deckel (3) und Filtermasse (5) sowie zwischen dem Behälterboden (6) und Filtermasse (5) angeordnetem Sieb (7, 8), wobei in den Behälterboden (6) ebenfalls Durchflußöffnungen (9) vorgesehen sind.

Der Deckel (3) ist als nach oben sich verjüngender Kegel (Flachkegel) ausgebildet und das deckelseitige Sieb (7), entsprechend dem Deckel (3), als Kegelsieb ausgeführt und dabei mit seinem umlaufenden Rand mit dem Deckel (3) verschweißt.

Das bodenseitige Sieb (8) ist von einer in sich ebenen Scheibe gebildet und mit seinem umlaufenden Rand mit dem Boden (6) verschweißt.

Der kegelförmige Deckel (3) zeigt in seiner Kegelspitze einen angeformten, sich vom Deckel (3) abhebenden, hohlen Dom (10) mit mindestens einem im Dommantel (10a) ausgenommenen Entlüftungsschlitz (11).

Es ist bevorzugt, im umlaufenden Dommantel (10a) mehrere auf dem Umfang gleichmäßig verteilt angeordnete, beispielsweise vier, Entlüftungsschlitze (11) auszusparen, wobei jeder Entlüftungsschlitz (11) mit Abstand vom Domdeckel (10b) über die gesamte Domhöhe verläuft und in der Innenseite des kegelfömrigen Deckels (3) ausläuft.

Jeder Entlüftungsschlitz (11) hat einen sich in der Wandstärke des Dommantels (10a) von innen nach außen konisch verjüngenden Querschnitt; dabei ist die kleinste Querschnittsbreite jedes Entlüftungsschlitzes (11) kleiner als die Korngröße der Filtermasse (5). Vorzugsweise zeigt jeder Entlüftungsschlitz (11) innen eine Schlitzbreite "X" von ca. 0,8 mm und außen eine Schlitzbreite "Y" von ca. 0,3 mm.

Der oder die Entlüftungsschlitze (11) sind in ihrem Gesamtentlüftungsquerschnitt derart bemessen, daß das durch die Filterkartusche (1) laufende Wasser jeweils eine gemäß einer Absorbtions- oder Reaktionszeit der Filtermasse (5) vorgegebene Verweilzeit hat, so daß im wesentlichen die Entlüftungsgeschwindigkeit die Durchflußgeschwindigkeit des Wassers durch die Filtermasse (5) bestimmt, wobei auch die Filtermasse (5) selbst auf die Durchflußgeschwindigkeit des Wassers einwirkt.

Durch eine derartige Durchflußgeschwindigkeit werden ca. 95% der Schadstoffe aus dem Trinkwasser entfernt.

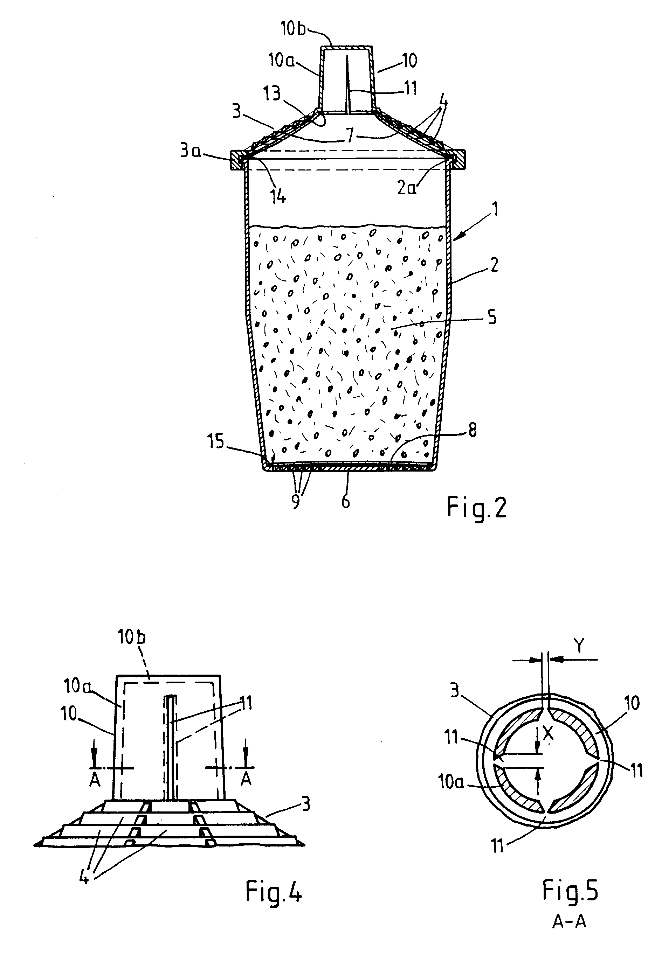

Jeder Entlüftungsschlitz (11) kann auf seiner gesamten Höhe die gleiche Querschnittsgröße haben, vgl. Fig. 4, oder aber auch nach oben hin im Querschnitt verjüngt ausgebildet sein, vgl. Fig. 2 und 3.

Das deckelseitige Sieb (7) besitzt in der Kegelspitze ein dem Dom (10) entsprechendes Loch (12) und dabei ist der umlaufende Lochrand (12a) sowie der umlaufende Siebrand (7a) in den Schweißstellen (13, 14) mit dem Deckel (3) innenseitig verbunden.

Das scheibenförmige Sieb (8) ist mit seinem umlaufenden Scheibenrand (8a) in der Schweißstelle (15) mit dem Boden (6) verbunden.

Die beiden Siebe (7, 8) bestehen aus einem filzigen Vliesstoff, vorzugsweise Kunststoffylies, z. B. Polypropylen.

Der Deckel (3) faßt mit einer umlaufenden Halteleiste (3a) über eine nach außen gerichtete Rastkante (2a) des Behälters (2) und ist durch diese Rastverbindung sicher und lösbar mit dem Behälter (2) verbunden.

Der Deckel (3) besteht aus Kunststoff, vorzugsweise Polyäthylene.

Der becherförmige Behälter (2) besteht aus Kunststoff und läßt sich für die Filterung von kaltem Wasser aus Polystyrol und für die Filterung von heißem Wasser aus Styroacrylintril Copolymer herstellen.

Die Durchflußöffnungen (4, 9) im Deckel (3) und im Boden (6) lassen sich von Schlitzen bilden.

Die Filtermasse (5) besteht aus einem hochwertigen Ionenaustauscherharz und spezieller Aktivkohle.

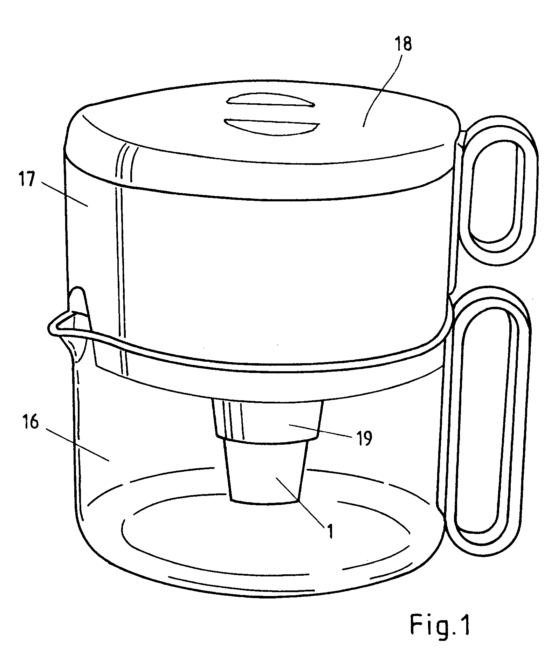

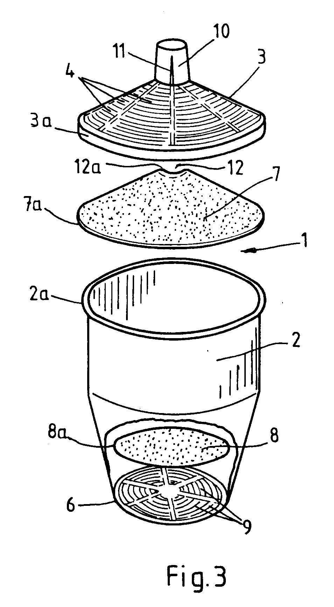

Aus Fig. 1 ist das Filtergerät ersichtlich, was ein das gefilterte Wasser aufnehmendes Sammelgefäß (16) und einen darauf abnehmbar angeordneten, das zu filternde Wasser aufnehmenden Aufsatztopf (17) mit abnehmbarem Deckel (18) aufweist.

In dem Boden des Aufsatztopfes (17), vorzugsweise in einem angeformten Stutzen (19), ist die Filterkartusche (1) auswechselbar eingesetzt und diese Filterkartusche (1) ragt in das Sammelgefäßt (16) hinein.

Das zu filternde Wasser wird in den Aufsatztopf (17) eingebracht und läuft dann durch die Schlitze (4) im Deckel (3) der Filterkartusche (1) durch das deckelseitige Sieb (7), durch die Filtermasse (5), durch das bodenseitige Sieb (8) und durch die Schlitze (9) im Behälterboden (6) hindurch, wobei beim Durchlaufen der Filtermasse (5) das Wasser durch Ionenaustausch- und Absorbtionsvorgänge gereingt wird, so daß das gefilterte Wasser dann in dem Sammelgefäß (16) aufgefangen wird.

Bei diesem Durchlauf wird gleichzeit die im Sammelgefäß (16) befindliche Luft verdrängt und strömt durch die Filterkartusche (1) hindurch nach oben und tritt aus den Entlüftungsschlitzen (11) aus, wobei diese Entlüftung die Durchflußgeschwindigkeit des zu filternden Wassers ergibt.

Die beiden Siebe (7, 8) verhindern, daß Partikel der Filtermasse (5) durch die Schlitze (9) im Boden (6) bzw. Schlitze (4) im Deckel (3) nach außen gelangen können.

Nach einem bestimmten Durchsatz mit Wasser, der abhängig von dem Härtegrad des Wasssers ist, ist die Filtermasse (5) erschöpft und sie muß ausgewechselt werden. Dazu wird die Kartusche (1) aus dem Filtergerät herausgenommen, deren Deckel (3) abgenommen und die Filtermasse (5) ausgeschüttet und gegen eine neue ausgetauscht.

Nach dem Aufsetzen des Deckels (3) wird die Kartusche (1) wieder in das Filtergerät eingesetzt und dieses ist dann wieder betriebsbereit.

## Patentansprüche

1. Filterkartusche zum Einsatz in ein Gerät zum Filtern von Flüssigkeiten, insbesondere von Trinkwasser, mit einem becherförmigen, eine körnige Filtermasse aufnehmenden Behälter, der in seinem Behälterboden Durchflußöffnungen aufweist und an dem ein flachkegelförmiger Deckel mit Durchflußöffnungen und mit in der Kegelspitze angeformten, sich vom Deckel abhebenden, hohlen Dom mit Entlüftungsöffnung abnehmbar gehalten ist, gekennzeichnet durch folgende Merkmale:
a) an den Deckel (3) und an den Behälterboden (6) ist innenseitig jeweils ein die Filtermasse (5) über- und untergreifendes Sieb (7, 8) aus einem Vliesstoff mit seinem umlaufenden Rand angeschweißt
und
b) im Mantel (10a) des Domes (10) sind mehrere Entlüftungsschlitze (11) ausgenommen, welche sich nahezu über die gesamte Domhöhe erstrecken und jeweils einen sich in der Wandstärke des Dommantels (10a) von innen nach außen konisch verjüngenden Querschnitt haben, wobei die kleinste Querschnittsbreite kleiner als die Korngröße der Filtermasse (5) ist.

2. Filterkartusche nach Anspruch 1, dadurch gekennzeichnet, daß das deckelseitige Sieb (7) als Flachkegelsieb ausgebildet ist, im Bereich seiner Kegelspitze ein dem Dom (10) entsprechendes Loch (12) hat und sein umlaufender Lochrand (12a) sowie sein umlaufender Siebrand (7a) durch jeweils eine Schweißnaht (13, 14) mit dem Deckel (3) verbunden ist.

3. Filterkartusche nach Anspruch 1, dadurch gekennzeichnet, daß das bodenseitige Sieb (8) von einer in sich ebenen Scheibe gebildet ist und mit seinem umlaufenden Scheibenrand (8a) durch eine Schweißnaht (15) mit dem Boden (6) verbunden ist.

4. Filterkartusche nach einem der Ansprüche 1 bis 3, dadurch gekennzeichnet, daß daß die Siebe (7, 8) aus einem filzigen Vliesstoff, vorzugsweise Kunststoffvlies, wie Polypropylen bestehen.

5. Filterkartusche nach einem der Ansprüche 1 bis 4, dadurch gekennzeichnet, daß der Dom (10) in seinem umlaufenden Mantel (10a) mehrere auf dem Umfang gleichmäßig verteilt angeordnete Entlüftungsschlitze (11) hat, jeder Entlüftungsschlitz (11) mit Abstand vom Domdeckel (10b) beginnend über die gesamte Domhöhe verläuft und in der Innenseite des Deckels (3) ausläuft und jeder Entlüftungsschlitz (11) auf seiner gesamten Höhenlänge gleiche Querschnittsbreite hat oder nach oben hin in der Querschnittsbreite verjüngt ist.

6. Filterkartusche nach einem der Ansprüche 1 bis 5, dadurch gekennzeichnet, daß jeder Entlüftungsschlitz (11) innen eine Schlitzbreite "X" von ca. 0,8 mm und außen eine Schlitzbreite "Y" von ca. 0,3 mm hat.

7. Filterkartusche nach einem der Ansprüche 1 bis 6, dadurch gekennzeichnet, daß die Entlüftungsschlitze (11) in ihrem Gesamtentlüftungsquerschnitt derartig bemessen sind, daß das durch die Filterkartusche (1) laufende Wasser jeweils eine gemäß einer Absorbtions- oder Reaktionszeit der Filtermasse (5) vorgegebene Verweilzeit hat, so daß im wesentlichen die Entlüftungsgeschwindigkeit die Durchflußgeschwindigkeit des Wassers durch die Filtermasse (5) bestimmt.

8. Filterkartusche nach einem der Ansprüche 1 bis 7, dadurch gekennzeichnet, daß der Deckel (3) aus Kunststoff, vorzugsweise Polyäthylene besteht.

9. Filterkartusche nach einem der Ansprüche 1 bis 8, dadurch gekennzeichnet, daß der becherförmige Behälter (2) aus Kunststoff und zur Filterung von kaltem Wasser aus einem Kunststoff auf der Basis von Polystyrol und zur Filterung von heißem Wasser aus einem Kunststoff auf der Basis von Styroacrylintril Copolymer besteht.

## Claims

1. Filter cartridge for insertion into a device for filtering liquids, particularly drinking water, having a cup-shaped container which accommodates a granular filter compound and incorporates flow openings in its base, and on which is a detachable flattened-cone-shaped cover with flow openings, and having a hollow dome with a vent opening, which dome is moulded in the cone apex and lifts away from the cover, characterised by the following features:
a) screens (7, 8) made of a fleece material and passing respectively over and under the filter compound are welded by their peripheral edge to the inside of the cover (3) and the container base (6), respectively,
and
b) in the casing (10a) of the dome (10) are a plurality of ventilation slots (11) extending almost the full height of the dome and each with a cross-section which tapers conically from the inside outwards in the wall thickness of the dome casing (10a), the smallest cross-sectional width being less than the particle size of the filter compound (5).

2. Filter cartridge according to claim 1, characterised in that the screen (7) nearest the cover is a flat-cone screen, in the area of its apex has a hole (12) which corresponds to the dome (10), and its peripheral hole rim (12a) and its peripheral screen rim (7a) are each joined to the cover (3) by a respective welded seam (13, 14).

3. Filter cartridge according to claim 1, characterised in that the screen (8) nearest the base is constituted by an inherently plane disc and the peripheral edge (8a) of the disc is joined to the base (6) by a welded seam (15).

4. Filter cartridge according to any of claims 1 to 3, characterised in that the screens (7, 8) are composed of a felt-type fleece material, preferably plastic fleece, for example polypropylene.

5. Filter cartridge according to any of claims 1 to 4, characterised in that the dome (10) has in its peripheral casing (10a) a plurality of ventilation slots (11) uniformly distributed along the circumference, each ventilation slot (11) extending the entire height of the dome and spaced therefrom, beginning at the dome cover (10b) and emerging on the inside of the cover (3), and each ventilation slot (11) has the same cross-sectional width over its entire vertical length or tapers upwards in its cross-sectional width.

6. Filter cartridge according to any of claims 1 to 5, characterised in that each ventilation slot (11) has on the inside a slot width "X" of approx. 0.8 mm and on the outside a slot width "Y" of approx. 0.3 mm.

7. Filter cartridge according to any of claims 1 to 6, characterised in that the ventilation slots (11) are so dimensioned in overall vent cross-section that the water running through the filter cartridge (1) in each case has a residence time preset in accordance with an absorption or reaction time of the filter compound (5), with the result that essentially the rate of ventilation determines the flow rate of the water through the filter compound (5).

8. Filter cartridge according to any of claims 1 to 7, characterised in that the cover (3) is composed of plastic, preferably polyethylene.

9. Filter cartridge according to any of claims 1 to 8, characterised in that the cup-shaped container (2) is made of plastic, and for cold-water filtration is a polystyrene-based plastic, and for hot-water filtration is a styroacrylonitrile-copolymer-based plastic.

## Revendications

1. Cartouche filtrante pour dispositif de filtration de liquides, notamment d'eau potable, comprenant un récipient en forme de timbale, accueillant une masse filtrante granulée et dont le fond est pourvu d'orifices de passage, ce récipient présentant un couvercle amovible en forme de cône tronqué avec orifices de passage et un dôme creux, qui s'élève sur le couvercle, avec lequel il fait corps, et est pourvu d'une ouverture d'aération,
caractérisée en ce que
a) des tamis (7, 8) en nappe fibreuse, saisissant la masse filtrante (5) dessus resp. dessous sont soudés, à l'intérieur, sur leur pourtour, au couvercle (3) resp. au fond (6) du conteneur
et
b) plusieurs fentes d'aération (11) sont pratiquées dans le manteau (10a) du dôme (10) et s'étendent sur presque toute la hauteur du dôme, leur section transversale s'amincissant vers l'extérieur et la plus petite largeur de section transversale étant inférieure à la granulométrie de la masse filtrante (5).

2. Cartouche filtrante selon la revendication 1, caractérisée en ce que
le tamis (7) situé du côté du couvercle est conçu sous forme de cône tronqué et est pourvu, au sommet de son cône, d'un trou (12) correspondant au dôme (10), et que le pourtour (12a) de ce trou ainsi que le pourtour (7a) du tamis sont reliés chacun au couvercle (3) par un cordon de soudure (13, 14).

3. Cartouche filtrante selon la revendication 1, caractérisée en ce que,
le tamis (8), situé du côté du fond, est formé par une rondelle plane, dont le pourtour (8a) est relié au fond (6) par un cordon de soudure (15).

4. Cartouche filtrante selon l'une des revendications 1 à 3,
caractérisée en ce que
les tamis (7, 8) consistent en une nappe feutrée , de préférence en fibres synthétiques, comme le polypropylène, par exemple.

5. Cartouche filtrante selon l'une des revendications 1 à 4,
caractérisée en ce que
plusieurs fentes d'aération (11) sont pratiquées dans le manteau (10a) du dôme (10), étant réparties régulièrement, et que chacune de ses fentes d'aération (11), partant, à intervalle, du couvercle (10b) du dôme (10) s'étend sur toute la hauteur de celui-ci et débouche dans le côté intérieur du couvercle (3), la section transversale de chaque fente d'aération (11) présentant la même largeur sur toute la hauteur de la fente ou s'amincissant vers le haut.

6. Cartouche filtrante selon l'une des revendications 1 à 5,
caractérisée en ce que
chaque fente d'aération (11) a une largeur d'environ 0,8 mm à l'intérieur et une largeur "Y" d'environ 0,3 mm à l'extérieur.

7. Cartouche filtrante selon l'une des revendications 1 à 6,
caractérisée en ce que
la section transversale globale des fentes d'aération (11) est calculée de sorte que le liquide traversant la cartouche filtrante (1) séjourne pendant un temps prédéterminé en fonction du temps d'absorption ou de réaction de la masse filtrante (5) et que la vitesse d'aération détermine la vitesse de passage du liquide à travers la masse filtrante (5).

8. Cartouche filtrante selon l'une des revendications 1 à 7,
caractérisée en ce que
le couvercle (3) est en matière plastique, de préférence en polyéthylène.

9. Cartouche filtrante selon l'une des revendications 1 à 8,
caractérisée en ce que
le récipient (2) en forme de timbale est en matière plastique, cette matière plastique étant à base de polystyrène pour la filtration d'eau froide et en matière plastique à base de copolymère styrèneacrylo-nitrile pour la filtration d'eau chaude.
